# EUROPÄISCHE PATENTANMELDUNG

(11) **EP 0 802 231 A2**
(43) Veröffentlichungstag der Anmeldung: **22.10.1997**
(21) Anmeldenummer: 97106123.9
(22) Anmeldetag: 15.04.1997
(51) Int. Cl.: C08L 83/04

(54) **Siliconzusammensetzungen und ihre Verwendungen**

(30) Priorität: 19.04.1996 US 635347; 28.01.1997 US 789143
(71) Anmelder: DOW CORNING CORPORATION, Midland Michigan 48686-0994 (US)
(72) Erfinder: Datz-Siegel, Teresa Lynn, Midland, Michigan 48640 (US); Fey, Kenneht Christopher, Midland, Michigan 48640 (US)
(74) Vertreter: Fleischer, Holm Herbert, Dr.

(57) **Abstract**

The present invention relates to a silicone composition prepared by reacting a mixture comprising (i) mineral oil, (ii) a polyorganosiloxane, (iii) a silicon compound and (iv) a catalytic amount of a catalyst. The compositions of this invention are resistant to phase separation and are useful as foam control compositions in various foam producing systems.

## Beschreibung

This invention relates to a silicone composition prepared by reacting a mixture comprising mineral oil, a polyorganosiloxane, a silicon compound and a catalytic amount of a catalyst.

Silicone compositions which are prepared by a reaction of similar components have been disclosed. For example, the following U.S. Patents are generally representative: 3,666,681; 4,564,467; 4,639;489; 4,690,713; 4,749,740; 4,978,471; 4,983,316 and 5,283,004. Similar international documents describe this also in EP-A 0 217 501; GB-A 1,224,026 and GB-A 1,496,011.

It is an object of the present invention to prepare silicone compositions which are advantageously utilized in a variety of applications including foam producing systems.

It is a further object of this invention to provide silicone compositions wherein foaming behavior is significantly controlled.

It is another object of this invention to unexpectedly provide a silicone composition which is stable, resistant to phase separation and dispersible into a variety of media.

The present invention is a silicone composition prepared by reacting at 20 to 300°C. a mixture comprising: (i) 1 to 100 parts by weight of mineral oil; (ii) 5 to 100 parts by weight of a polyorganosiloxane having a viscosity of 200 to 100 million mm²/s at 25°C. expressed by the general formula R²_{b}(R³O)_{c}SiO_{(4-b-c)/2} in which R² is a monovalent hydrocarbon or halogenated hydrocarbon group having 1 to 10 carbon atoms, R³ is hydrogen atom or a monovalent hydrocarbon group having 1 to 10 carbon atoms, b has an average value of 1.9 to 2.2 and c has a sufficient value to give at least one -OR³ group in each molecule, at least one such -OR³ group being present at the molecular chain end; (iii) 0.1 to 20 parts by weight of at least one silicon compound selected from (a) an organosilicon compound of the general formula R⁴_{d}SiX_{4-d} in which R⁴ is a monovalent hydrocarbon group having 1 to 5 carbon atoms, X is selected from halogen atom or hydrolyzable group and d has an average value of one or less; (b) a partially hydrolyzed condensate of compound (a); (c) a siloxane resin comprising (CH₃)₃SiO_{1/2} units and SiO_{4/2} units wherein the molar ratio of (CH₃)₃SiO_{1/2} units to SiO_{4/2} units is 0.4:1 to 1.2:1, or (d) a condensate of compound (c) with compound (a) or (b); and (iv) a catalytic amount of a catalyst.

The silicone compositions of this invention are prepared by reacting a mixture of (i) mineral oil, (ii) a polyorganosiloxane, (iii) a silicon compound and (iv) a catalyst.

Component (i) is "mineral oil" which refers to hydrocarbon oils derived from carbonaceous sources, such as petroleum, shale and coal and equivalents thereof. This component is any type of mineral oil or mineral spirits that are commercially available, including heavy white mineral oil high in paraffin content; light white mineral oil; petroleum oils such as aliphatic or wax-base oils; aromatic or asphalt-base oils; mixed base oils; petroleum derived oils such as petroleum spirits, ligroin, lubricants, engine oils, machine oils or cutting oils; and medicinal oils such as refined paraffin oil. The above mentioned mineral oils are available commercially at a variety of viscosities from Amoco Chemical Company (Chicago, IL) under the tradename Amoco White Mineral Oil, from Exxon Company (Houston, Texas) under the tradenames Bayol™, Marcol™, Primol™ or from Lyondell Petrochemical Company (Houston, Texas) under the trade name Duoprime^{R} Oil or from Exxon under the tradename Varsol 60. Preferably, the mineral oil has a viscosity of from 5 to 20 millipascal-seconds (mPa·s) at 25°C.

Component (ii) is a polyorganosiloxane comprising siloxane units of the general formula R¹ₐ(R²O)_{b}SiO_{(4-a-b)/2} and having a viscosity of 200 to 100 million mm²/s at 25°C. wherein R¹ is independently selected from monovalent hydrocarbon or halogenated hydrocarbon groups having from 1 to 10 carbon atoms, R² is hydrogen atom or R¹ and the -OR² group is present at least at molecular chain end of the polyorganosiloxane. The value of a is between 1.9 to 2.2 and b has a value to provide at least one -OR² group per molecule. It is particularly preferred that polyorganosiloxane (ii) is a hydroxyl-terminated polydimethylsiloxane having a viscosity of 1,000 to 50,000 mm²/s at 25°C.

Component (iii) is at least one silicon compound selected from (a) to (d): (a) an organosilicon compound of the general formula R³_{c}SiX_{4-c} wherein R³ is a monovalent hydrocarbon group having one to five carbon atoms, X is halogen atom or hydrolyzable group, such as -OR⁴ or -OR⁵OR⁶, in which R⁵ is a divalent hydrocarbon group having one to five carbon atoms and R⁴ and R⁶ are each selected from hydrogen atom or monovalent hydrocarbon group having one to five carbon atoms, the average value of c not exceeding 1; (b) a partially hydrolyzed condensate of compound (a); (c) a siloxane resin, comprising (CH₃)₃SiO_{1/2} and SiO₂ units and having a molar ratio of (CH₃)₃SiO_{1/2} to SiO₂ of 0.4:1 to 1.2:1; or (d) a condensate of the siloxane resin (c) with the compound (a) or (b). It is preferred that component (iii) is selected from either an alkyl polysilicate, wherein the alkyl group has one to five carbon atoms, such as methyl polysilicate, ethyl polysilicate and propyl polysilicate or the siloxane resin (c). Most preferably, component (iii) is either ethyl polysilicate or a siloxane resin copolymer comprising (CH₃)₃SiO_{1/2} units and SiO₂ units in a molar ratio of approximately 0.4:1 to 1.2:1.

Component (iv) is a catalyst for promoting the reaction of the other components. Any compound which promotes condensation reactions or rearrangement/condensation reactions are suitable as our component (iv). It is selected from siloxane equilibration catalysts, silanol-condensing catalysts, or a combination thereof. Catalysts suitable as component (iv) are exemplified by alkali metal hydroxides such as potassium hydroxide, sodium hydroxide or cesium hydroxide; alkali metal silanolates such as potassium silanolate; alkali metal alkoxides such as potassium isopropoxide or potassium ethoxide; quaternary ammonium hydroxides such as beta-hydroxyethyltrimethyl ammonium hydroxide, benzyltrimethyl ammonium hydroxide and tetramethyl ammonium hydroxide; quaternary ammonium silanolates; quaternary phosphonium hydroxides such as tetrabutyl phosphonium hydroxide or tetraethylphosphonium hydroxide; quaternary phosphonium silanolates; metal salts of organic acids such as dibutyltin dilaurate, stannous acetate, stannous octanoate, lead napthenate, zinc octanoate, iron 2-ethylhexoate and cobalt naphthenate; mineral acids such as sulfuric or hydrochloric acid; organic acids such as acetic acid or organosulfonic acids; and ammonium compounds such as ammonium carbonate or ammonium hydroxide. It is preferred that the catalyst is selected from potassium silanolate, potassium hydroxide or sodium hydroxide.

The mixture can further comprise up to 30 parts by weight of component (v) a finely divided filler. The finely divided filler is exemplified by fumed, precipitated or plasmatic TiO₂, Al₂O₃, Al₂O₃/SiO₂, ZrO₂/SiO₂ and SiO₂. The finely divided filler can be hydrophilic or hydrophobic. The filler can be hydrophobed during manufacture (i.e. in-situ) or independently. Various grades of silica having a particle size of several millimicrons to several microns and a specific surface area of 50 to 1000 m²/g are commercially available and suitable for use as component (v).

This mixture alternatively comprises up to 20 parts by weight of component (vi), a polyorganosiloxane comprising siloxane units of the general formula R⁷_{d}(R⁸O)ₑSiO_{(4-d-e)/2} and having a viscosity of 5 to 200 mm²/s at 25°C. wherein R⁷ is a monovalent hydrocarbon or halogenated hydrocarbon group having one to ten carbon atoms and R⁸ is hydrogen atom or a monovalent hydrocarbon group having one to ten carbon atoms. The value of d is between 1.9 and 2.2 and e has a value to provide two or more -OR⁸ groups in each molecule. It is preferred that component (vi) is a hydroxyl-terminated polydimethylsiloxane having a viscosity of 10 to 100 mm²/s at 25°C. It is more preferred that component (vi) is added when filler (v) is a hydrophilic silica.

A mixture of components (i), (ii), (iii) and (iv), and optionally components (v) and/or (vi), is reacted at room temperature or under heat to produce our claimed silicone compositions, the proportions of the various components being: Component (i) - 1 to 100 parts by weight, preferably 40-70 parts by weight; Component (ii) - 5 to 100 parts by weight; Component (iii) - 0.1 to 20, preferably 1 to 7, parts by weight; Component (iv) - A catalytic amount (usually in the range of 0.03 to 1 part by weight); Component (v), if present, - up to 30, preferably 1 to 15, and highly preferred is 5 to 15 parts by weight; Component (vi), if present, - up to 20, preferably 1 to 10, parts by weight.

The silicone compositions of this invention are prepared by simply mixing components (i), (ii), (iii) and (iv), and any optional components at room temperature (20 to 25^{o}C.) or by heating this blend to 110 to 120^{o}C. Filler (v), if desired, is then uniformly added using an appropriate dispersing device, such as a homomixer, colloid mill or triple roll mill. The resulting mixture, if heated, is heated to a temperature of 50 to 300^{o}C., preferably 100 to 300°C., and reacted for one to eight hours, although the reaction time varies depending on the temperature. If component (vi) is employed in the composition, it is generally added after the filler (v). It is preferable to carry out all mixing and heating operations in an inert gas atmosphere to avoid any danger and to remove volatile matter (unreacted matter, by-products and the like.). The mixing order of components, the heating temperature and residence time are not believed critical and can be changed as required. It is further preferred that, after reaction, the catalyst is neutralized to further stabilize the composition. Examples of this neutralization component are dry ice with calcium carbonate or acetic acid with water.

Alternatively, our silicone composition preferably comprises mineral oil, a polyorganosiloxane, a silicon compound and a catalyst, this combination optionally containing a filler such as silica.

A highly preferred silicone composition is a homogeneous blend of a hydroxyl-terminated polydimethylsiloxane, a mineral oil having a viscosity of 5 to 20 mPa·s at 25^{o}C., an alkyl polysilicate wherein the alkyl group has one to five carbon atoms, such as methyl polysilicate, ethyl polysilicate or propyl polysilicate and a potassium silanolate or a potassium hydroxide catalyst reacted at a temperature of 25 to 300°C.

The silicone composition of this invention may be used as it is or in the form of a solution obtained by a dispersion in an appropriate solvent or an emulsion obtained by known emulsifying methods.

The present invention also relates to a process for controlling foam in a foaming system wherein the claimed silicone compositions are simply added to the foaming or foam-producing system, in an amount sufficient to reduce foaming, as determined by routine experimentation. Usually, our compositions are added at a concentration of 0.001 to 0.1 part by weight, based on the weight of the foaming system. However, the skilled artisan will readily determine optimum concentrations after a few routine experiments. The method of addition is not critical and the composition is metered or added by any of the techniques known in the art.

Examples of foaming systems contemplated herein include media encountered in the production of phosphoric acid; sulphite or sulphate process pulping operations; bauxite digestion solutions in the production of aluminum; metal working fluids; paper manufacture; detergent systems; hydrocarbon based systems; and oil extraction. The claimed compositions are conveniently used as any kind of foam control composition, i.e. as defoaming compositions and/or antifoaming compositions. Defoaming compositions are generally considered as foam reducers whereas antifoaming compositions are generally considered as foam preventors. Thus, the compositions of this invention find utility as foam control compositions in various media such as inks, coatings, paints, detergents, pulp and paper manufacture, textile dyes and hydrocarbon-containing fluids. They also find utility in gas-oil separations and in petroleum processing operations.

All parts and percentages in the examples are on a weight basis unless indicated to the contrary. All viscosities were measured by a Brookfield Viscometer at 25°C. The following materials ware employed in the preparation of these silicone compositions:
Mineral Oil A is Duoprime® Oil 55, a white mineral oil having a viscosity of 10 mPa·s at 25^{o}C. from Lyondell Petrochemical Company (Houston, Texas).
Mineral Oil B is Duoprime® Oil 90, a white mineral oil having a viscosity of 23 mPa·s at 25^{o}C. from Lyondell Petrochemical Company (Houston, Texas).

### EXAMPLE 1

Into a 500 cm³ glass reactor, equipped with an electric stirrer and a nitrogen blanket, were loaded 55 parts of Mineral Oil B, 39 parts of a hydroxy end-blocked polydimethylsiloxane having a viscosity of 12,500 mPa·s and 5.9 parts of polyethyl silicate. These were mixed until homogeneous. The mixture was then catalyzed with ethanolic KOH (to total 20 ppm K+) and the resulting reaction was allowed to run for 30 hours. The reaction product was then neutralized with a combination of calcium carbonate and dry ice even though there was no direct evidence of a viscosity increase.

The reaction product was a cloudy, lumpy liquid which under microscopic evaluation was found to be a fine emulsion of two discrete phases. Less than 1 week after manufacture, this finished material was observed to have completely separated into two separate liquid phases.

### EXAMPLE 2

Into a 500 cm³ glass reactor, equipped with an electric stirrer and a nitrogen blanket, were loaded 55 parts of Mineral Oil A, 39 parts of a hydroxy end-blocked polydimethylsiloxane having a viscosity of 12,500 mPa·s and 5.9 parts of polyethyl silicate. These were mixed until homogeneous. The mixture was then catalyzed with ethanolic KOH (to total 20 ppm K+) and the resulting reaction was allowed to run until evidence of a viscosity increase was observed. The reaction product was then neutralized with a combination of calcium carbonate and dry ice. The reaction product was slightly hazy (due to the calcium carbonate) and was a homogeneous liquid. This material remained stable at room temperature for over 1 week.

### EXAMPLE 3

Shake testing of the composition of Example 2 was carried out using a Triton™ X-100 surfactant solution. The concentration of the surfactant in water was 1% by weight.

The silicone composition from Example 2 was prepared as an aqueous emulsion prior to shake testing. To a 250 ml stainless steel beaker were added 120.16 grams of an aqueous mixture (which contained 3.60 grams of Pegosperse® 1500 [a combination of polyethylene glycol esters of C₁₄-C₁₈ fatty acids from Lonza, Fairlawn, NJ.] and 9.13 grams of Lonzest® GMS Technical [hydrogenated mono-, di- and tri- C₁₆-C₁₈ fatty acid glycerides from Lonza, Fairlawn, NJ] dispersed in 107.06 grams of water). At 500 RPM using a marine blade agitator, 13.35 grams of the silicone composition of Example 2 were added to the aqueous mixture over a period of 2 minutes. This composition was mixed at 500 RPM for a total of 30 minutes additional time.

The shake test involved 100 grams of a 1 weight percent solution of Triton™ X-100 (TRITON™ X-100 is octylphenoxy polyethoxy ethanol having an HLB of 13.5 from Rohm and Haas Company, Philadelphia, PA) and a measured amount of the antifoam composition, in this case the aqueous emulsion described above. The test was run at 25^{o}C. Five shakes of the test sample were run in succession lasting 10 seconds, 40 seconds, 60 seconds, 120 seconds and 600 seconds. After each period of shaking, the time for the foam to collapse to 0.5 cm above the original liquid level of the test solution was recorded. The time it took for a clear area of the liquid surface, free of bubbles, to appear was also recorded (break time). A blank test run, in which no silicone composition of the invention was added to the Triton™ X-100 solution, was also subjected to the same shake test. The results are shown in Tables 1 and 2.

**TABLE 1**

| | COLLAPSE TIME (sec.) | | | | |
|---|---|---|---|---|---|
| Composition | 10 | 40 | 60 | 120 | 600 |
| Example 3 | 37 | 42 | 36 | 39 | 43 |
| Blank | >120 | >120 | >120 | >120 | >120 |

**TABLE 2**

| | BREAK TIME (sec.) | | | | |
|---|---|---|---|---|---|
| Composition | 10 | 40 | 60 | 120 | 600 |
| Example 3 | 85 | 80 | 70 | 95 | 85 |
| Blank | >120 | >120 | >120 | >120 | >120 |

### EXAMPLE 4

Into a 500 cm³ glass reactor, equipped with an electric stirrer and a nitrogen blanket, were loaded 76 parts of mineral spirit, 24 parts of a hydroxy end-blocked polydimethylsiloxane having a viscosity of 12,500 mPa·s and progressively 0.2 part of polyethyl silicate. These were mixed until homogeneous. The mixture was then catalyzed with 0.35 part of NaOH and the resulting reaction was allowed to run for 2 hours. The reaction product was then neutralized with a combination of 0.1 part of acetic acid and 0.05 part of water until the viscosity reached 300 mm²/s. The reaction product was a cloudy, gel-like product. The finished material was subsequently observed to be stable during 6 months storage.

### EXAMPLE 5

A foaming test of the composition of Example 4 was carried out using 90 ml of crude oil from the Sullum Voe Terminal, doped with 10 ml of n-hexane and was poured into an air-inlet tube, to the bottom of which was fastened a gas diffuser. The gas diffuser was a 25.4 mm diameter spherical gas diffuser stone made of fused crystalline alumina grain. The air inlet tube just touched the bottom of the cylinder and was approximately at the center of the circular cross section.

The composition prepared in Example 4, at a dilution level of 1% active material, was added at the surface of the crude oil mixture. The test was carried out at an air flow rate of 30 liters per hour. The foam volume percentage was recorded versus time during 2 minutes. The results are listed in Table 3 for the composition prepared in Example 4 (denoted A) and are compared to a comparative foaming test (reference, denoted Ref.) performed under the same conditions, but without the composition of this invention.

**Table 3**

| % foam/time | 10 seconds | 20 seconds | 30 seconds | 40 seconds | 60 seconds | 120 seconds |
|---|---|---|---|---|---|---|
| A | 35 | 60 | 70 | 60 | 50 | 30 |
| Ref. | 120 | * | * | * | * | * |
| * - signifies overfoaming | | | | | | |

## Claims

1. A silicone composition is prepared by reacting at a temperature of 20 to 300°C. a mixture comprising:
(i) 1 to 100 parts by weight of mineral oil;
(ii) 5 to 100 parts by weight of a polyorganosiloxane having a viscosity of 200 to 100 million mm²/s at 25°C. expressed by the general formula R¹ₐ(R²O)_{b}SiO_{(4-a-b)/2} in which R¹ is a monovalent hydrocarbon or halogenated hydrocarbon group having 1 to 10 carbon atoms, R² is hydrogen atom or a monovalent hydrocarbon group having 1 to 10 carbon atoms, a has an average value of 1.9 to 2.2 and b has a sufficient value to give at least one -OR² group in each molecule, at least one such -OR² group being present at the end of the molecular chain;
(iii) 0.1 to 20 parts by weight of at least one silicon compound selected from
(a) an organosilicon compound of the general formula R³_{c}SiX_{4-c} in which R³ is a monovalent hydrocarbon group having 1 to 5 carbon atoms, X is selected from halogen atom or hydrolyzable group and c has an average value of one or less,
(b) a partially hydrolyzed condensate of compound (a),
(c) a siloxane resin comprising (CH₃)₃SiO_{1/2} units and SiO_{4/2} units wherein the molar ratio of (CH₃)₃SiO_{1/2} units to SiO_{4/2} units is 0.4:1 to 1.2:1, or
(d) a condensate of compound (c) with compound (a) or (b); and
(iv) a catalytic amount of a catalyst.

2. A composition according to claim 1 wherein the mineral oil compound (i) is a white mineral oil having a viscosity Of 5 to 20 millipascal-seconds at 25^{o}C.

3. A composition according to claim 1 or 2 wherein polyorganosiloxane (ii) is a hydroxyl-terminated polydimethylsiloxane having a viscosity of 1,000 to 50,000 mm²/s at 25^{o}C.

4. A composition according to any of claims 1 - 3 wherein silicon compound (iii) is selected from ethyl polysilicate or a siloxane resin copolymer comprising (CH₃)₃SiO_{1/2} units and SiO₂ units in a molar ratio of approximately 0.4:1 to 1.2:1, respectively.

5. A composition according to any of claims 1 - 4 wherein the catalyst (iv) is selected from alkali metal hydroxides, alkali metal silanolates, alkali metal alkoxides, quaternary ammonium hydroxides, quaternary ammonium silanolates, quaternary phosphonium hydroxides, quaternary phosphonium silanolates, ammonium carbonate or metal salts of organic acids.

6. A composition according to any of claims 1 - 5 wherein the mixture further comprises up to 30 parts by weight of: (v) at least one filler that is a hydrophobic silica having a surface area of 50 to 300 m²/g.

7. A composition according to any of claims 1 - 6 wherein the mixture further comprises up to 20 parts by weight of: (vi) a polyorganosiloxane having a viscosity of 5 to 200 mm²/s at 25°C. and expressed by the general formula R⁷_{d}(R⁸O)ₑSiO_{(4-d-e)/2} wherein R⁷ is a monovalent hydrocarbon or halogenated hydrocarbon group having one to ten carbon atoms, R⁸ is hydrogen atom or a monovalent hydrocarbon group having one to ten carbon atoms, d is has a value of 1.9 and 2.2 and e has a value so as to provide at least two -OR⁸ groups in each molecule.

8. A composition according to claim 7 wherein said polyorganosiloxane (vi) is a hydroxyl-terminated polydimethylsiloxane having a viscosity of 10 to 100 mm²/s at 25^{o}C.

9. A method for controlling foam in a foam producing system comprising adding to said system the composition of any of claims 1 - 8.

10. A method according to claim 9 wherein the foam producing system is selected from inks, coatings, paints, detergents, pulp manufacture, paper manufacture, textile dyes, hydrocarbon containing fluids, gas-oil separation or petroleum processing.
